(19) Europäisches Patentamt
European Patent Office
Office européen des brevets

(11) Veröffentlichungsnummer: **0 372 378 A2**

(12) **EUROPÄISCHE PATENTANMELDUNG**

(21) Anmeldenummer: **89122055.0**

(51) Int. Cl.5: **C07F 7/10, C08G 77/62**

(22) Anmeldetag: **29.11.89**

(30) Priorität: **03.12.88 DE 3840776**

(43) Veröffentlichungstag der Anmeldung: **13.06.90 Patentblatt 90/24**

(84) Benannte Vertragsstaaten: **CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Vaahs, Tilo, Dr.**
**Am Flachsland 54**
**D-6233 Kelkheim(Taunus)(DE)**

(54) **Oligomere Silazane und Verfahren zu ihrer Herstellung.**

(57) Die Erfindung betrifft neue oligomere Silazane, sowie ein Verfahren zu ihrer Herstellung. Das Verfahren besteht darin, daß man überschüssigen Ammoniak mit einem Gemisch aus $R^1R^2SiCl_2$ und $Cl_2R^3Si-CH_2CH_2-SiR^3Cl_2$ bei -70 bis +100 °C umsetzt, wobei unabhängig voneinander
$R^1,R^2$ = H, $C_1$-$C_6$-Alkyl oder $C_2$-$C_6$-Alkenyl und
$R^3$ = $C_1$-$C_6$-Alkyl oder $C_2$-$C_6$-Alkenyl ist.

Die oligomeren Silazane können leicht in polymere Chlorsilazane umgewandelt werden, welche ihrerseits mit hoher Ausbeute in Siliciumnitrid enthaltende keramische Materialien überführt werden können.

EP 0 372 378 A2

## Oligomere Silazane und Verfahren zu ihrer Herstellung

Die Erfindung betrifft neue oligomere Silazane, sowie ein Verfahren zu ihrer Herstellung. Die erfindungsgemäßen oligomeren Silazane können durch weitere Umsetzungen, z. B. mit Chlorsilanen, in polymere Silazane umgewandelt werden, die ihrerseits zu Siliciumnitrid enthaltenden keramischen Materialien pyrolysiert werden können.

Die Herstellung von polymeren Silazanen aus anderen Oligomeren wurde bereits beschrieben (US-PS 4 482 669, US-PS 4 720 532, PCT-WO 88/01260), ebenfalls die Pyrolyse von Polysilazanen zu Siliciumnitrid enthaltendem keramischem Material (R.R. Wills et al. Ceramic Bulletin, Vol. 62 (1983), 904-915).

Zur Herstellung von oligomeren oder niedermolekularen Silazanen als Zwischenprodukten für Polymere werden bisher Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828).

Die vorliegende Erfindung stellt neue Ausgangsmaterialien für Polysilazane zur Verfügung, nämlich oligomere Silazane.

Ein Gegenstand der vorliegenden Erfindung ist ein Verfahren zur Herstellung von oligomeren Silazanen, dadurch gekennzeichnet, daß man überschüssigen Ammoniak mit einem Gemisch aus $R^1R^2SiCl_2$ und $Cl_2R^3Si\text{-}CH_2\text{-}CH_2\text{-}SiR^3Cl_2$ bei -70 °C bis +100 °C umsetzt, wobei unabhängig voneinander $R^1$, $R^2$ = H, $C_1$-$C_6$-Alkyl oder $C_2$-$C_6$-Alkenyl und $R^3$ = $C_1$-$C_6$-Alkyl oder $C_2$-$C_6$-Alkenyl ist.

Vorzugsweise ist $R^1$, $R^2$ = H, $C_1$-$C_3$-Alkyl oder $C_2$-$C_3$-Alkenyl und $R^3 = C_1$-$C_3$-Alkyl oder $C_2$-$C_3$-Alkenyl; insbesondere ist $R^1$ = H und $R^2 = R^3 = CH_3$.

Die als Ausgangsverbindungen eingesetzten Chlorsilane $R^1R^2SiCl_2$ sind im Handel erhältlich, die ethylen= verbrückten Spezies $Cl_2R^3Si\text{-}CH_2\text{-}CH_2\text{-}SiR^3Cl_2$ sind durch eine Hydrosilylierung von handelsüblichem $R^3HSiCl_2$ und Ethin zugänglich.

Zur Herstellung der oligomeren Silazane werden vorzugsweise die Chlorsilane in einem Lösungsmittel vorgelegt, welches sich inert gegenüber den Reaktanten - Chlorsilane und Ammoniak - verhält, also gesättigte aliphatische oder aromatische Kohlenwasserstoffe wie n-Pentan, Cyclohexan, Toluol, chlorierte Kohlenwasserstoffe wie Chloroform oder Chlorbenzol, oder Ether wie Diethylether oder THF, und dann mit Ammoniak bis zur Sättigung vermischt. Die Sättigung tritt dann ein, wenn alle SiCl-Funktionen durch NH-Gruppen substituiert sind. Gegebenenfalls kann das Verfahren auch unter vermindertem Druck durchgeführt werden. Auch bei Drücken im Bereich von 1 bis 100 bar kann gearbeietet werden. Ammoniak kann als Gas oder als Flüssigkeit zudosiert werden. Das Verfahren kann auch kontinuierlich gestaltet werden.

Die hergestellten neuen oligomeren Silazane haben eine molekulare Struktur, die durch die Formel (I)

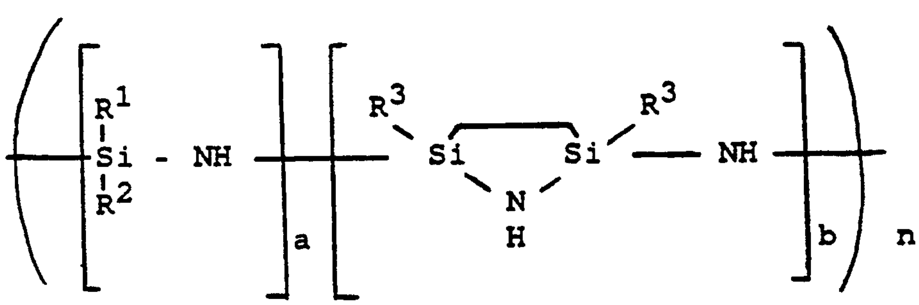

mit n etwa 2 bis etwa 12 wiedergegeben werden kann.

Ein weiterer Gegenstand der Erfindung sind demgemäß oligomere Silazane der Formel

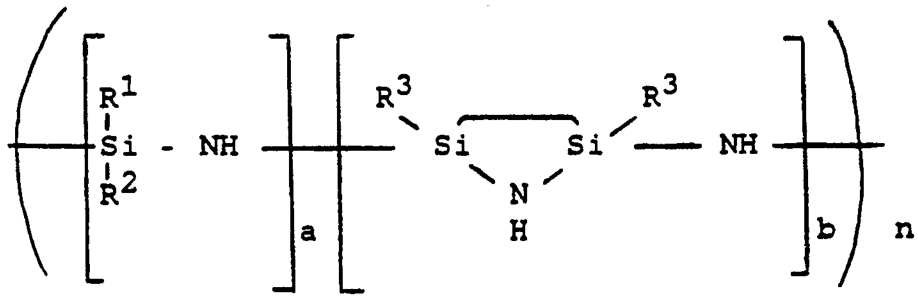

worin a>0, b> 0 und n etwa 2 bis etwa 12 ist und wobei unabhängig voneinander
$R^1$,$R^2$ = H, $C_1$-$C_6$-Alkyl oder $C_2$-$C_6$-Alkenyl und $R^3$ = $C_1$-$C_6$-Alkyl oder $C_2$-$C_6$-Alkenyl ist. a und b sind die Molfraktionen der jeweiligen Struktureinheiten. a und b bilden die Summe 1, wobei a>0 und b>0 ist. Vorzugsweise ist $R^1$, $R^2$ = H, $C_1$-$C_3$-Alkyl oder $C_2$-$C_3$-Alkenyl und $R^3$ = $C_1$-$C_3$-Alkyl oder $C_2$-$C_3$-Alkenyl. Besonders bevorzugt ist $R^1$ = H, $R^2 = R^3 = CH_3$.

Die erfindungsgemäßen oligomeren Silazane stellen wertvolle Zwischenprodukte dar, da sie leicht in polymere Chlorsilazane umgewandelt werden können, welche ihrerseits mit hoher Ausbeute in Siliciumnitrid enthaltende keramische Materialien überführt werden können.

Um die polymeren Chlorsilazane zu erhalten, werden die oligomeren Silazane der Formel (I) mit mindestens einem der Chlorsilane $Cl_2R^4Si$-$CH_2$-$CH_2$-$SiR^4Cl_2$, $Cl_3Si$-$CH_2$-$CH_2$-$SiR^5Cl_2$, $R^6SiCl_3$ oder $R^7SiHCl_2$ bei 30 °C bis 300 °C umgesetzt, wobei unabhängig voneinander
$R^1$, $R^2$ = H, $C_1$-$C_6$-Alkyl oder $C_2$-$C_6$-Alkenyl und $R^3$, $R^4$, $R^5$, $R^6$, $R^7$ = $C_1$-$C_6$-Alkyl oder $C_2$-$C_6$-Alkenyl ist.

Vorzugsweise beträgt bei der Umsetzung zum polymeren Chlorsilazan das molare Verhältnis der Reaktanten Chlorsilan:Monomereinheit des Oligosilazans (n = 1) etwa 0,1:1 bis etwa 1,5:1, insbesondere etwa 0,1:1 bis etwa 0,7:1.

Zur Umsetzung der Reaktanten miteinander werden vorzugsweise die Oligosilazane vorgelegt und mindestens eins der genannten Chlorsilane zugegeben. Da die Reaktion exotherm ist, wird beim Zusammengeben der Reaktanten vorzugsweise zunächst die Temperatur bei 30 bis 50 °C gehalten. Anschließend erhitzt man auf Temperaturen von 100 bis 300 °C, vorzugsweise auf 120 bis 250 °C.

Das als Nebenprodukt gebildete $NH_3$ entweicht während der Reaktion teilweise. Nach beendeter Umsetzung wird der Rest an leichter flüchtigen Verbindungen im allgemeinen durch Anlegen von Vakuum aus dem Reaktionsgefäß entfernt.

Das bei der Reaktion ebenfalls entstehende $NH_4Cl$ sublimiert im Verlauf der Reaktion zum größten Teil aus dem Reaktionsgemisch ab. Der eventuell verbliebene Rest des $NH_4Cl$ kann durch Extraktion mit einem inerten organischen Lösungsmittel, wie n-Hexan, Toluol, Ether von dem erfindungsgemäß hergestellten polymeren Chlorsilazan abgetrennt werden.

Die Reaktionsdauer richtet sich nach der Geschwindigkeit des Aufheizens und der Reaktionstemperatur. Im allgemeinen genügt eine Reaktionszeit von 3 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die erfindungsgemäßen polymeren Chlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Das Verfahren kann auch kontinuierlich gestaltet werden.

Die hergestellten neuen polymeren Chlorsilazane haben die Formel (II)

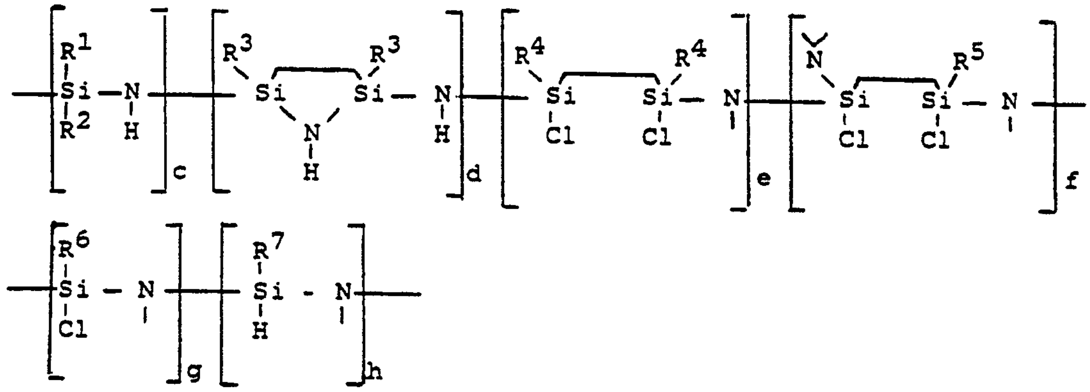

wobei die freien Valenzen der Stickstoffatome mit H-Atomen oder Silylresten R*SiXN<(X=H,Cl,N<, $CH_2CH_2Si$<) abgesättigt sind und wobei c,d,e,f,g,h die Molfraktionen der jeweiligen Structureinheiten bedeuten und unabhängig voneinander

$R^1,R^2$ = H, $C_1$-$C_6$-Alkyl oder $C_2$-$C_6$-Alkenyl

$R^4,R^5,R^6,R^*$ = $C_1$-$C_6$-Alkyl oder $C_2$-$C_6$-Alkenyl

$R^7$ = $C_1$-$C_6$-Alkyl oder $C_2$-$C_6$-Alkenyl, falls mindestens einer der Indizes d,e,f,g > 0 ist

$R^7$ = $C_2$-$C_6$-Alkenyl, falls d=e=f=g=0 ist.

Die polymeren Chlorsilazane können durch Umsetzung mit Ammoniak ("Ammonolyse") in Polysilazane überführt werden, die wiederum durch Pyrolyse in Siliziumnitrid enthaltendes keramisches Material umgewandelt werden können.

Die Ammonolyse kann in flüssigem $NH_3$ erfolgen. Es ist jedoch vorteilhaft, sie in einem organischen Lösungsmittel durchzuführen. Geeignet sind alle Lösungsmittel, die sich inert gegenüber den polymeren Chlorsilazanen verhalten. Bevorzugt sind solche Lösungsmittel, in denen das als Nebenprodukt anfallende Ammoniumchlorid geringe Löslichkeit und gut Abtrennbarkeit aufweist, z.B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das polymere Chlorsilazan in Lösung vorzulegen und gasförmigen Ammoniak einzuleiten oder flüssigen Ammoniak hinzuzufügen. Wurden die polymeren Chlorsilazane in einem geeigneten organischen Lösungsmittel hergestellt, so kann die Ammonolyse ohne vorherige Abtrennung des $NH_4Cl$ in diesem Lösungsmittel durchgeführt werden. Die Ammonolyse wird vorzugsweise mit einem Überschuß $NH_3$ durchgeführt, um sicher zu gehen, daß die Reaktion vollständig ist und die Endprodukte möglichst weitgehend chlorfrei sind. Im allgemeinen reicht für diesen Zweck die doppelte stöchiometrische Menge.

Im allgemeinen wird bei einer Temperatur von etwa -50 bis +100 °C gearbeitet, vorzugsweise bei -20 bis +30 °C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb Raumtemperatur, z.B. bei -33 °C bei der Verwendung von flüssigem $NH_3$ zu arbeiten.

Nach beendeter Ammonolyse wird ggf. das überschüssige $NH_3$ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die Polysilazane unmittelbar als weiße Pulver erhalten. Die Polysilazane sind in den obigen organischen Lösungsmitteln löslich, so daß diese sowohl für das Beschichten von Oberflächen als auch für die Herstellung von Fasern verwendet werden können.

Die Polysilazane können durch Pyrolyse in inerter Stickstoff-oder Argonatmosphäre bei Temperaturen von 800 bis 1200 °C zu amorphen, dichten Materialien pyrolysiert werden, die im wesentlichen aus Si, N und C bestehen und in Spuren auch H und O enthalten können. Bei Pyrolysetemperaturen oberhalb 1200 °C, etwa im Bereich von 1200 °C bis 1400 °C, entstehen teilamorphe, mikrokristalline keramische Werkstoffe, die als kristalline Phase $\alpha$-$Si_3N_4$ enthalten.

Ein besonderer Vorteil ist, daß sich die Polysilazane vor der Pyrolyse nach verschiedenen Verfahren zu dreidimensionalen Formkörpern formen lassen.

Eine wichtige Methode der Formgebung ist das Ziehen von Fasern. Dabei lassen sich Fasern aus hochviskosen Lösungen des Polysilazans in Lösungsmitteln, wie Toluol, THF oder Hexan ziehen. Das Fasernziehen geschieht vorteilhafterweise mittels Spinndüsen von 80 bis 150 µm Durchmesser. Durch

anschließendes Strecken wird der Faden verjüngt, so daß nach der Pyrolyse ein sehr fester Faden von 2 bis 20 µm, insbesondere 5 bis 15 µm Durchmesser entsteht. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der Polysilazane ist die Herstellung dichter, gut haftender, amorpher oder mikrokristalliner keramischer Beschichtungen auf Metallen, insbesondere Stählen. Die Beschichtung erfolgt mit Hilfe einer Lösung des Polysilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200 °C bzw. 1200 bis 1400 °C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Weiter kann man die oben beschriebenen Polysilazane mit gleichhoher keramischer Ausbeute von 70 bis 90 % statt in Inertgas auch in $NH_3$-Atmosphäre pyrolysieren. Dabei resultiert ein praktisch kohlenstofffreier, glasklarer, farbloser Werkstoff. Bei der Pyrolyse in $NH_3$ bei 1000 °C oder höher liegt der C-Gehalt unterhalb 0,5 Gew.-%. Das Pyrolyseprodukt besteht je nach Pyrolysetemperatur aus praktisch reinem amorphem Siliziumnitrid (Pyrolyse unterhalb 1200 °C) oder kristallinem $Si_3N_4$ (Pyrolyse oberhalb 1200 °C, insbesondere oberhalb 1300 °C). Die Pyrolyse in $NH_3$ läßt sich auf alle nach den oben beschriebenen Formgebungsverfahren hergestellten Formkörper, also aus Pulvern geformte Körper, Fasern, Beschichtungen anwenden.

Vorzugsweise führt man jedoch die Umwandlung der polymeren Chlorsilazane in Siliziumnitrid enthaltendes keramisches Material so durch, daß man die intermediär entstehenden Polysilazane nicht isoliert. In diesem Fall setzt man die polymeren Chlorsilazane vorzugsweise mit gasförmigem Ammoniak um und pyrolysiert das dabei entstehende Reaktionsgemisch in Ammoniakatmosphäre.

**Versuchsbericht**

Herstellung des 1,2-Bis(methyldichlorsilyl)ethans der Formel

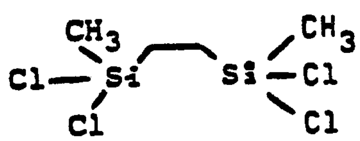

Mit Hilfe einer Hydrosilylierung wurden zwei Molekule Methyldichlorsilan $(CH_3)HSiCl_2$ an ein Molekül Ethin HCCH addiert. Dazu leitete man gasförmiges Ethin in vorgelegtes Toluol als Lösungsmittel ein. Zu dieser Lösung gab man 0,5 ml einer 0,05 molaren Lösung von Hexachlorplatinsäure in Chloroform. Man erhitzte auf Temperaturen oberhalb 80 °C und tropfte langsam Methyldichlorsilan zu (Sdp. 45 °C). Dabei wurde ständig Ethin eingeleitet. Der Verlauf der Reaktion wurde über die Temperatur des Reaktionsgemisches verfolgt. Sank sie unter 80 °C, so lag zuviel nicht reagiertes Methyldichlorsilan vor, welches man dann vor weiterem Zutropfen zuerst abreagieren ließ. Die Ausbeute an 1,2-Bis(methyldichlorsilyl)ethan war nahezu 100 %, und die Lösung konnte ohne Aufarbeitung für die Herstellung des Oligosilazans verwendet werden. Der Gehalt an Chlorsilan ließ sich leicht mit Hilfe des $^1H$-NMR-Spektrums feststellen. Bevorzugt sind möglichst geringe Anteile an Lösungsmittel. Völlig lösungsmittelfrei ließ sich die Verbindung herstellen, wenn von vorneherein 1,2-Bis(methyldichlorsilyl)ethan vorgelegt wurde, um die notwendige Reaktionstemperatur zu erreichen.

**Beispiele**

**Beispiel 1**

Herstellung des oligomeren Silazans der Formel (I) mit $R^1 = H$, $R^2 = R^3 = CH_3$ und $a = 0{,}67$, $b = 0{,}33$, sowie dessen Weiterverarbeitung zu einem polymeren Chlorsilazan.

**a. Herstellung des Oligomeren.**

In einem 2-l-Vierhalskolben mit Rührvorrichtung, Kühlung und Gaseinleitungsvorrichtung wurden in 1,5 l absolutem THF 60 ml (66,9 g, 0,58 mol) $CH_3SiHCl_2$ und 60 ml (72,0 g, 0,28 mol) $Cl_2CH_3Si\text{-}CH_2CH_2\text{-}SiCH_3Cl_2$ gelöst und vermischt. Dazu leitete man gasförmigen Ammoniak so ein, daß die Temperatur des Reaktionsgemisches zwischen 0 °C und 10 °C blieb. Sobald Sättigung erreicht war, d. h. alle SiCl-Gruppen durch NH-Gruppen substituiert waren, ließ man auftauen, um anschließend unter Schutzgas das bei der Reaktion entstandene Ammoniumchlorid abzutrennen. Das Filtrat wurde bei Unterdruck bis ca. 10 mbar und ca. 40 °C von THF und den anderen flüchtigen Bestandteilen befreit. Zurück blieb das lösungsmittelfreie Oligosilazan als klares, leicht bewegliches Öl (62,7 g).

Ausbeute: 83,7 %

$^1$H-NMR-Daten:
$SiCH_3$ $\delta = 0{,}0 - 0{,}5$ ppm (br), Intensität 14,4
$NH + SiCH_2CH_2Si$ $\delta = 0{,}5 - 1{,}25$ ppm (br), Intensität 8,0
SiH $\delta = 4{,}5 - 5{,}0$ ppm (br), Intensität 1,6
Hauptbestandteile im GC:
9,3 % mit Kp : 226 °C
7,6 % mit Kp : 251 °C
24,1 % mit Kp : 256 °C

Der Rest verteilte sich auf 24 Peaks mit maximal 5 Flächen-%.

**b. Herstellung des Polymeren.**

Das Oligosilazan wurde in 150 ml Toluol gelöst und vorsichtig mit 47 ml (59,8 g, 0,4 mol) $CH_3SiCl_3$ versetzt. Dabei stieg die Inntemperatur auf 52 °C an. Anschließend wurde 2 h zum Rückfluß erhitzt, wobei sich ein farbloser Niederschlag bildete. Danach wurde das Lösungsmittel bei Unterdruck in eine -78 °C kalte Kühlfalle destilliert, wobei die Temperatur des Ölbades jede 15 min um 10 °C erhöht und der Druck im Kolbeninneren etwas erniedrigt wurde, sodaß bei 220 °C schließlich 0,1 mbar erreicht waren. Dabei sublimierte ein Teil der Reaktionsmischung an die kälteren Teile des Gefäßes, und es blieb eine klare Schmelze zurück. Beim Abkühlen wurde diese zäher und schließlich fest, bei 20 °C war die resultierende Substanz glasartig spröde und klar durchscheinend.

Ausbeute: 45,6 g

$^1$H-NMR-Daten:
$SiCH_3 + SiCH_2CH_2Si + NH$ $\delta = 0{,}0 - 2{,}0$ ppm (br), Intensität 20
SiH $\delta = 4{,}5 - 5{,}2$ ppm (br), Intensität 0,9

| Analysendaten: | | | | |
|---|---|---|---|---|
| gefunden: | Si 36,0 %, | N 16,0 %, | Cl 19,9 %, | O<0,3 % |
| berechnet: | Si 37,2 %, H 4,8 % | N 18,6 %, | Cl 17,1 %, | C 21,1 %, |

**Beispiel 2**

Herstellung des oligomeren Silazans der Formel (I) mit $R^1 = H$, $R^2 = R^3 = CH_3$ und $a = 0{,}41$, $b = 0{,}59$.

Das Vorgehen entsprach dem in Beispiel 1 beschriebenen, jedoch mit folgenden Ausgangsmaterialien:
30 ml (33,5 g, 0,29 mol) $CH_3SiHCl_2$
90 ml (108 g, 0,42 mol) $Cl_2CH_3Si\text{-}CH_2\text{-}CH_2\text{-}SiCH_3Cl_2$

Ausbeute: 69,8 g (90 %)
$^1$H-NMR-Daten:
$SiCH_3$ $\delta = 0{,}0 - 0{,}5$ ppm (br), Intensität 13,6
$NH + SiCH_2CH_2Si$ $\delta = 0{,}5 - 1{,}3$ ppm (br), Intensität 9,5
SiH $\delta = 4{,}5 - 5{,}0$ ppm (br), Intensität 0,9
Hauptbestandteile im GC:
20,5 % mit Kp : 179 °C
16,6 % mit Kp : 257 °C
21,8 % mit Kp : 284 °C

Der Rest verteilte sich auf 17 Peaks mit maximal 5 Flächen-%.

**Beispiel 3**

Herstellung des oligomeren Silazans der Formel (I) mit $R^1 = R^2 = R^3 = CH_3$ und $a = 0{,}64$, $b = 0{,}36$.

Das Vorgehen entsprach dem in Beispiel 1 beschriebenen, jedoch mit folgenden Ausgangsmaterialien:
60 ml (63,8 g, 0,49 mol) $(CH_3)_2SiCl_2$
60 ml (72 g, 0,28 mol) $Cl_2CH_3Si\text{-}CH_2CH_2\text{-}SiCH_3Cl_2$
Ausbeute: 85,0 % (83,8 g)
$^1$H-NMR-Daten:
$SiCH_3$ $\delta = 0{,}0 - 0{,}6$ ppm (br), Intensität 15,3
$NH + SiCH_2CH_2Si$ $\delta = 0{,}6 - 1{,}4$ ppm (br), Intensität 6,8
Mittlere Molmasse: 580 g/mol (kryoskopisch in Benzol)

**Beispiel 4**

Herstellung des oligomeren Silazans der Formel (I) mit $R^1$ = Vinyl, $R^2 = R^3 = CH_3$ und $a = 0{,}35$, $b = 0{,}65$.

Das Vorgehen entsprach dem in Beispiel 1 beschriebenen, jedoch mit folgenden Ausgangsmaterialien:
30 ml (32,6 g, 0,23 mol) $VinylSiCH_3Cl_2$
90 ml (108 g, 0,42 mol) $Cl_2CH_3Si\text{-}CH_2CH_2\text{-}SiCH_3Cl_2$
Ausbeute: 88,1 % (72,5 g)
$^1$H-NMR-Daten:
SiVinyl $\delta = 5{,}5 - 6{,}5$ ppm (br), Intensität 2,9
$SiCH_3$ $\delta = 0{,}0 - 0{,}5$ ppm (br), Intensität 15,2
$NH + SiCH_2CH_2Si$ $\delta = 0{,}6 - 1{,}5$ ppm (br), Intensität 13,0
Mittlere Molmasse: 500 g/mol (kryoskopisch in Benzol)

**Ansprüche**

1. Verfahren zur Herstellung von oligomeren Silazanen, dadurch gekennzeichnet, daß man überschüssigen Ammoniak mit einem Gemisch aus $R^1R^2SiCl_2$ und $Cl_2R^3Si\text{-}CH_2CH_2\text{-}SiR^3Cl_2$ bei - 70 bis + 100 °C umsetzt, wobei unabhängig voneinander $R^1,R^2$ = H, $C_1$-$C_6$-Alkyl oder $C_2$-$C_6$-Alkenyl und $R^3$ = $C_1$-$C_6$-Alkyl oder $C_2$-$C_6$-Alkenyl ist.

2. Verfahren nach Anspruch 1, dadurch gekennzeichnet, daß $R^1,R^2$ = H, $C_1$-$C_3$-Alkyl oder $C_2$-$C_3$-Alkenyl und $R^3$ = $C_1$-$C_3$-Alkyl oder $C_2$-$C_3$-Alkenyl ist.

3. Verfahren nach Anspruch 1, dadurch gekennzeichnet, daß $R^1$ = H und $R^2 = R^3 = CH_3$ ist.

4. Oligomere Silazane, erhältlich nach dem Verfahren gemäß einem der Ansprüche 1 bis 3.

5. Oligomere Silazane der Formel

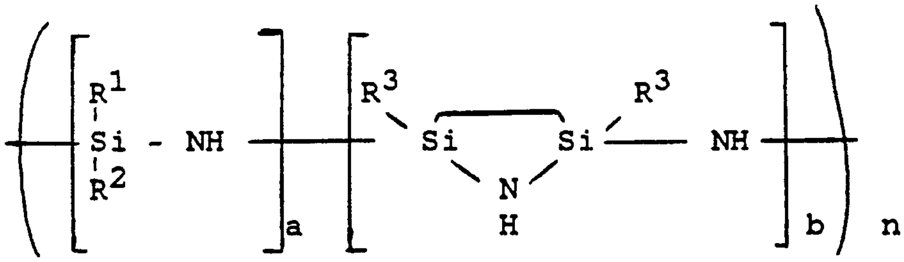

worin a>0, b>0 und n etwa 2 bis etwa 12 ist und wobei unabhängig voneinander
$R^1$,$R^2$ = H, $C_1$-$C_6$-Alkyl oder $C_2$-$C_6$-Alkenyl und
$R^3$ = $C_1$-$C_6$-Alkyl oder $C_2$-$C_6$-Alkenyl ist.

6. Oligomere Silazane nach Anspruch 5, dadurch gekennzeichnet, daß
$R^1$,$R^2$ = H, $C_1$-$C_3$-Alkyl oder $C_2$-$C_3$-Alkenyl und
$R^3$ = $C_1$-$C_3$-Alkyl oder $C_2$-$C_3$-Alkenyl ist.

7. Oligomere Silazane nach Anspruch 5, dadurch gekennzeichnet, daß $R^1$ = H und $R^2 = R^3 = CH_3$ ist.